# DEMANDE DE BREVET EUROPEEN

(11) **EP 4 035 978 A1**
(43) Date de publication de la demande: **03.08.2022**
(21) Numéro de dépôt: 22154431.5
(22) Date de dépôt: 01.02.2022
(51) Int. Cl.: B62J 6/05, B62J 29/00

(54) **RETROVISEUR CLIGNOTANT**

(30) Priorité: 02.02.2021 FR 2101002
(71) Demandeur: Visaia Bike, 07000 Privas (FR)
(72) Inventeur: VOLKMANN, Dorian, 07000 PRIVAS (FR)
(74) Mandataire: Fidal Innovation

(57) **Abrégé**

Accessoire (1) pour véhicule à pédales muni d'un guidon assurant la fonction de rétroviseur et/ou d'indicateur de changement de direction, comprenant une partie amovible (12) sans outil et une partie (11) à fixer sur le guidon comprenant à une première extrémité un système destiné à être inséré dans le cintre (13) dudit guidon pour assurer une liaison encastrement avec le cintre du guidon et à une deuxième extrémité (111) la deuxième partie dudit dispositif de fixation à verrouillage rapide destinée à coopérer avec la première partie dudit dispositif de fixation à verrouillage rapide pour lier ladite partie (11) à fixer sur le guidon et ladite partie (12) amovible. La partie (12) amovible est en liaison pivot avec la partie (11) au moyen d'un moyeu (122c) d'un dispositif de liaison pivot est à l'intérieur dudit boîtier (122).

## Description

### DOMAINE DE L'INVENTION

La présente invention se rapporte à un accessoire pour véhicule roulant de type bicyclette.

Plus précisément, l'invention se rapporte à un accessoire combinant les fonctions de rétroviseur et d'indicateur de changement de direction.

### ARRIÈRE-PLAN TECHNOLOGIQUE

Dans le domaine des bicyclettes, pourvues ou non d'une assistance électrique, le poids du véhicule doit être le plus faible possible pour limiter l'effort de pédalage à fournir. Les accessoires des bicyclettes sont donc limités à l'essentiel. En conséquence, les cyclistes ont pour habitude de signaler leur intention de tourner en étendant leur bras dans la direction correspondante, ainsi que d'effectuer les contrôles nécessaires en tournant brièvement la tête vers l'arrière.

Dans le premier cas, le cycliste relâche une main du guidon et son bras n'est pas nécessairement visible, par exemple la nuit. Dans le second cas, le cycliste ne contrôle pas la circulation du côté avant pendant les fractions de secondes pendant lesquelles il tourne la tête.

Ces pratiques ne sont donc pas exemptes de risques et sont donc peu satisfaisantes pour la sécurité du cycliste et des co-utilisateurs de la voie sur laquelle il se déplace.

Il est connu dans les domaines des deux-roues motorisés d'équiper le véhicule de rétroviseurs clignotants. Le document US20160236742A1 divulgue un dispositif combinant les fonctions de rétroviseur et d'indicateur de direction pour équiper un motocycle.

Toutefois, ce dispositif n'est ni peu encombrant, ni léger, et de ce fait, il est peu adapté au domaine des bicyclettes.

Par ailleurs, les accessoires de bicyclette sont sujets aux vols, puisque les bicyclettes sont fréquemment stationnées sur la voie publique. Il est donc souhaitable que ces accessoires soient amovibles, compacts et faciles à transporter, ce qui n'est pas le cas du dispositif décrit par US20160236742A1.

Le document TW201114642A divulgue un rétroviseur clignotant réversible gauche-droite pour bicyclette, mais le dispositif n'est pas clairement amovible. De plus, la liaison rotule mise en œuvre ne permet ni de fixer réellement l'orientation du plan du miroir, qui risque d'être modifiée en cas de choc ou de secousse modérée notamment, ni le rabattement du rétroviseur en cas de choc important.

Le document GB2458308A décrit un de rétroviseur clignotant amovible spécialement conçu pour les bicyclettes, rabattable en cas de choc violent. Toutefois, la conception de ce rétroviseur est fortement asymétrique, de sorte que le rétroviseur adapté au côté gauche ne peut pas être remplacé par le rétroviseur adapté au côté droit. En conséquence, dans le cas où le rétroviseur de gauche est cassé ou perdu, le cycliste perd le rétroviseur le plus important pour sa sécurité dans le cas d'une circulation sur la voie de droite, jusqu'au rachat d'un rétroviseur de gauche.

Par ailleurs, le dispositif reste relativement lourd et peu compact du fait de la conception de la charnière articulant le rétroviseur. La longueur de la partie amovible du rétroviseur est au moins égale à la somme de celle du miroir et de celle de la partie charnière, qui s'étend à l'extérieur du miroir.

L'invention vise ainsi à proposer un accessoire de bicyclette :
- amovible, réversible gauche/droite
- assurant au moins la fonction de rétroviseur et/ou d'indicateur de direction,
- dont la longueur de la partie amovible est proche de celle du miroir, afin que l'utilisateur le transporte aisément lorsque la bicyclette est stationnée dans un lieu non sécurisé,
- rabattable en cas de choc violent,
- et dont l'orientation du miroir est fixée au choix de l'utilisateur en-dehors d'un tel choc.

### RÉSUMÉ DE L'INVENTION

L'invention concerne un accessoire pour véhicule à pédales muni d'un guidon comprenant :
a. une partie amovible sans outil
- comprenant :
   i- un boîtier,
   ii- un élément formant le moyeu d'un dispositif de liaison pivot,
   iii- un élément de liaison comprenant à une première extrémité la première partie d'un dispositif de fixation à verrouillage rapide, et à une deuxième extrémité l'arbre du dispositif de liaison pivot, guidé en rotation par le moyeu du dispositif de liaison pivot de sorte que l'élément de liaison est en liaison pivot par rapport au boîtier,
- et comportant :
   i- au moins un élément réfléchissant fixé sur le boîtier et recouvrant au moins une partie d'une face extérieure du boîtier,
   ii- et/ ou un circuit électrique placé au moins en partie à l'intérieur du boîtier et comportant une batterie électrique, au moins un interrupteur actionnable depuis l'extérieur du boîtier et au moins une source de lumière visible dont une fraction de la lumière est émise vers l'extérieur du boîtier au travers d'une portion de surface transparente du boîtier,

b. une partie à fixer sur le guidon comprenant à une première extrémité un système destiné à être inséré dans le cintre du guidon pour assurer une liaison encastrement avec le cintre du guidon et à une deuxième extrémité la deuxième partie dudit dispositif de fixation à verrouillage rapide destinée à coopérer avec la première partie du dispositif de fixation à verrouillage rapide pour lier la partie à fixer sur le guidon et la partie amovible, caractérisé en ce que le moyeu du dispositif de liaison pivot est à l'intérieur du boîtier.

Grâce à ces dispositions, l'accessoire peut être utilisé comme rétroviseur et/ou indicateur de changement de direction, il est en partie amovible et il présente un encombrement latéral minimal.

Selon différents aspects, il est possible de prévoir l'une et/ou l'autre des caractéristiques ci-dessous prises seules ou en combinaison.

Selon un mode de réalisation, la portion de l'accessoire extérieure au cintre du guidon est symétrique par rapport à un plan contenant un axe horizontal gauche-droite, de sorte qu'il est réversible et peut être monté et utilisé équivalemment à gauche ou à droite du cycliste.

Grâce à cette disposition, l'accessoire peut être utilisé indifféremment à gauche ou à droite, ce qui facilite son installation et le remplacement du rétroviseur essentiel à la sécurité en fonction de la voie de déplacement empruntée par le véhicule qu'il équipe.

Selon un mode de réalisation, le dispositif de fixation à verrouillage rapide est de type verrouillage à quart de tour ou à baïonnette. Grâce à cette disposition, la partie amovible de l'accessoire est amovible sans outil et sans effort particulier.

Selon un mode de réalisation, l'accessoire comprend au moins un élément réfléchissant qui recouvre au moins en partie la portion de surface externe du boîtier sous laquelle est formé le moyeu du dispositif de liaison. Grâce à cette disposition, le dispositif peut assurer une fonction de rétroviseur.

Selon un mode de réalisation, la longueur de la partie de l'accessoire externe au cintre du guidon dans la direction gauche-droite diffère de moins de 1 cm de la longueur du boîtier dans cette direction. Grâce à cette disposition, l'encombrement latéral de l'accessoire est limité. Selon un mode de réalisation, la partie amovible de l'accessoire comporte au moins un élément aimanté. Grâce à cette disposition, deux parties amovibles peuvent être aimantées l'une sur l'autre pour leur transport et/ou leur rangement.

Selon un mode de réalisation, l'élément de liaison comporte un dispositif de réglage et de blocage de l'orientation du plan de la face avant par rapport à un axe horizontal gauche-droite, par coopération de formes avec la deuxième extrémité de la partie à fixer sur le guidon comportant la deuxième partie du dispositif de fixation à verrouillage rapide. Grâce à cette disposition, l'accessoire peut être orienté en fonction de la taille et de la position du conducteur du véhicule.

Selon un mode de réalisation, le boîtier peut pivoter d'un angle supérieur à 80° dans le sens horaire et dans le sens trigonométrique autour de l'axe de la liaison pivot orienté arbitrairement. Grâce à cette disposition, l'accessoire peut se rabattre en cas de choc.

### BRÈVE DESCRIPTION DES DESSINS

Des modes de réalisation de l'invention seront décrits ci-dessous par référence aux dessins, décrits brièvement ci-dessous :
fig.1 représente un mode de réalisation de l'accessoire pour véhicule à pédales positionné sur le guidon du véhicule.
fig.2 représente une vue éclatée des éléments de la première partie de l'accessoire pour véhicule à pédales prêt à être positionné sur le guidon du véhicule, dans un repère (Oxyz) qui lui est lié.
fig.3 représente un mode de réalisation particulier de l'élément de liaison 111 de la partie 11 de l'accessoire 1 avec la partie 12 de l'accessoire 1 pour véhicule à pédales.
fig.4 représente une vue éclatée des éléments de la seconde partie de l'accessoire pour véhicule à pédales, prête à être assemblée, dans un repère (Ox'y'z') qui lui est lié.
fig.5 représente une vue agrandie de l'élément de liaison 123 dans un premier mode de réalisation.
fig.6 représente une vue agrandie de l'élément de liaison 123dans un deuxième mode de réalisation.
fig. 7 représente un dispositif antivol de l'accessoire pour véhicules à pédales dans un mode de réalisation particulier.

Sur les dessins, des références identiques désignent des objets identiques ou similaires.

### DESCRIPTION DÉTAILLÉE

L'invention concerne un accessoire pour véhicule à pédales, comme par exemple une bicyclette. Le véhicule est muni d'un guidon et éventuellement d'un dispositif d'assistance électrique.

Le guidon comporte un cintre 13 formé d'un tube creux, ouvert à ses deux extrémités. Le tube peut être droit. Il peut aussi être recourbé, vers l'avant ou vers l'arrière, et/ou vers le haut ou vers le bas. Il peut par exemple être en forme dite de « corne de vache ».

Le matériau constituant le tube est un matériau usuel dans le domaine des bicyclettes, par exemple l'aluminium ou la fibre de carbone.

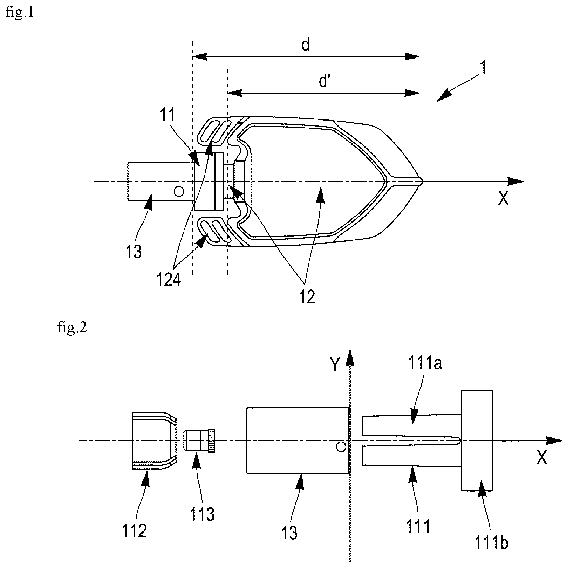

Un mode de réalisation de l'accessoire 1 est présenté sur la fig.1.

L'accessoire 1 comprend deux parties 11 et 12.

La première partie 11 de l'accessoire 1 est destinée à être insérée partiellement dans et fixée sur une extrémité quelconque, gauche ou droite, du cintre 13. Elle peut par exemple être réalisée en plastique moulé et/ou en métal.

Pour insérer la première partie 11 de l'accessoire 1 dans le cintre 13, il peut être nécessaire de retirer au préalable une poignée ou tout autre accessoire qui fermerait l'extrémité du tube.

La seconde partie 12 de l'accessoire 1 est destinée à être fixée de manière amovible sur la première partie 11 de l'accessoire 1.

Une vue détaillée d'un mode de réalisation de la première partie 11 de l'accessoire 1 est donnée à la fig.2.

La première partie 11 de l'accessoire 1 s'étend suivant une première direction (Ox).

La première partie 11 de l'accessoire 1 est pourvue du côté d'une première extrémité suivant la direction (Ox) d'un système destiné à être inséré dans le tube formant le cintre du guidon pour assurer une liaison encastrement avec le cintre du guidon.

Dans le mode de réalisation décrit à la fig.2, la première partie 11 de l'accessoire 1 est formée de trois éléments 111, 112 et 113. L'élément 112 de liaison de la partie 11 avec le cintre 13 est entièrement inséré dans le tube du guidon le premier ; La portion 11 la de l'élément de liaison 111 de la partie 11 de l'accessoire 1 avec la partie 12 de l'accessoire 1 est ensuite insérée dans l'élément 112 et lui est vissé par l'intermédiaire de l'élément 113. Le vissage provoque l'expansion des parties déformables de l'élément 112 de sorte que la première partie 11 de l'accessoire 1 est en liaison encastrement avec le cintre 13 du guidon.

Ce mode de réalisation de la liaison encastrement présente l'avantage de rendre l'accessoire 1 adaptable à une gamme de diamètres de tube assez large. Par exemple, il pourra être adapté à des cintres de diamètre intérieur de l'ordre de 20 à 30 mm.

D'autres modes de réalisation de la liaison encastrement peuvent être envisagés, tels que la présence dans la première partie 11 d'une extrémité profilée, formée dans un matériau de type caoutchouc ou élastomère, assurant la liaison encastrement par frottement.

Dans le mode de réalisation présenté, au niveau de sa deuxième extrémité dans la direction (Ox), constituée par la portion 111b de l'élément 111, la première partie 11 de l'accessoire 1 présente un évidement d'axe (Ox). Cet évidement forme la partie femelle d'un dispositif de fixation à verrouillage rapide.

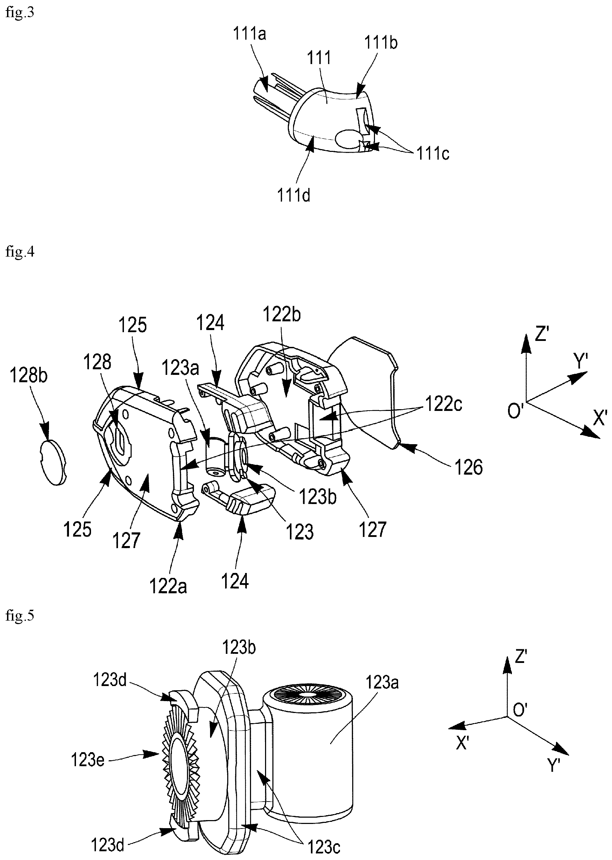

Par exemple, la forme de l'évidement est conçue pour que la partie mâle du dispositif de fixation à verrouillage rapide puisse y être insérée par translation suivant l'axe (Ox) et bloquée ou débloquée par rotation d'un quart de tour. Notamment l'évidement peut présenter une ou plusieurs encoches 111c, représentées sur la fig.3, qui permettent l'insertion de languettes de la partie mâle, qui sont ensuite bloquées par les parois de l'évidement après une rotation d'un quart de tour.

Le dispositif de fixation à verrouillage rapide peut dans un autre mode de fixation être de type fixation à baïonnette.

Grâce à cette disposition, la seconde partie 12 de l'accessoire 1, qui comporte la partie mâle du dispositif de fixation à verrouillage rapide, est amovible sans outil et sans effort excessif, tout en étant maintenue fermement lorsque le verrouillage est réalisé.

Optionnellement, dans un mode de réalisation présenté sur la fig.3, l'élément de liaison 111 de la partie 11 de l'accessoire 1 avec la partie 12 de l'accessoire 1 peut présenter une portion courbe 111d entre les portions 111a et les portions 111c, positionnée à l'extérieur du cintre 13 après assemblage. Cette disposition permet à l'accessoire 1 d'assurer la fonction de rétroviseur dans le cas où le cintre 13 du guidon est recourbé au niveau de l'extrémité sur laquelle la première partie 11 de l'accessoire 1 est insérée.

Dans le mode de réalisation présenté à la fig.4, la seconde partie 12 amovible de l'accessoire 1 comprend :
a- un boîtier 122 formé d'une moitié avant 122 a et d'une moitié arrière 122b pouvant être encastrées l'une dans l'autre ou vissées l'une avec l'autre, présentant chacune une face sensiblement plane et parallèle au plan (O'x'y'), et dont au moins une portion 125 est transparente à la lumière visible (l'arrière et l'avant sont définis par rapport au sens de déplacement du vélo) ;
b- un logement délimité par des parois 122c des moitiés avant et arrière 122a et 122b s'étendant vers l'intérieur du boîtier et dont la forme intérieure est celle d'une portion de cylindre - Le logement 122c forme le moyeu d'une liaison pivot d'axe parallèle à (O'z') ;
c- un élément de liaison 123 entre les parties 11 et 12 de l'accessoire 1 dont une vue détaillée dans un mode de réalisation particulier est présentée sur la fig.5 et dont
   - une extrémité 123a forme l'arbre de la liaison pivot et vient s'insérer dans le logement 122c, et
   - l'autre extrémité 123b forme l'élément mâle du dispositif de verrouillage rapide, destiné à être inséré dans l'élément femelle constitué par l'évidement de la portion 111b de l'élément de liaison 111 ; (Cet élément mâle peut être muni de languettes 123d à insérer dans des encoches de la partie femelle et permettant le verrouillage par vissage par quart de tour.)
   - les deux extrémités 123a et 123b sont reliées par une portion de raccord 123c ;
d- un ou plusieurs interrupteurs 124, solidaires du boîtier 122 et placés de sorte qu'ils puissent être actionnés par l'extérieur du boîtier 122 ;
e- un élément 126 réfléchissant la lumière visible.

L'ensemble formé par les éléments de références 122, 122a, 122b, 122c, 123, 123a, 123b, 124, 125 et 126 une fois assemblés est symétrique par rapport à un plan médiateur parallèle au plan (x'O'y').

En d'autres termes, l'ensemble formé par les éléments de références 122, 122a, 122b, 122c, 123, 123a, 123b, 124, 125 et 126 une fois assemblés présente un plan de symétrie horizontal lorsque l'élément réfléchissant 126 est placé dans un plan vertical.

Cette disposition permet d'assurer le caractère réversible gauche/droite de l'accessoire 1, de manière à ce qu'il puisse être utilisé d'un côté quelconque du cintre 13.

Par exemple, on peut prévoir une seule portion 125 transparente symétrique par rapport au plan médiateur pour chacune des moitiés 122a et 122b du boîtier 122, ou bien deux portions transparentes pour chacune des moitiés 122a et 122b, placées symétriquement l'une de l'autre par rapport au plan médiateur.

Chaque portion transparente 125 de la moitié 122a du boîtier 122 peut, dans un mode de réalisation particulier, être placée en regard d'une portion transparente 125 de la moitié 122b du boîtier 122, de sorte que la lumière émise par la source de lumière décrite plus loin puisse être perçue vers l'arrière et vers l'avant du vélo.

L'élément 126 réfléchissant peut par exemple être collé sur la face sensiblement plane de la moitié arrière 122b.

Dans un mode de réalisation particulier, il recouvre une fraction de préférence supérieure à 80%, de préférence supérieure à 90%, de préférence supérieure à 95%, de préférence supérieure à 97%, de préférence supérieure à 99%, de la surface non transparente de la face sensiblement plane de la moitié arrière 122b.

L'élément réfléchissant 126 est par exemple un miroir en métal galvanisé, plan ou présentant des zones concaves et/ou convexes pour optimiser le champ de vision du cycliste vers l'arrière. Les moitiés avant et arrière 122a et 122b, peuvent être formées dans un matériau plastique, à titre d'exemple tel que le polycarbonate. Le matériau est rendu opaque ou il est grainé, sauf dans les zones transparentes 125.

Optionnellement, un surmoulage 127, par exemple en silicone, peut être prévu pour augmenter la résistance de la seconde partie 12 de l'accessoire 1 aux chocs. Le surmoulage peut notamment recouvrir en partie les faces latérales (c'est-à-dire les faces autres que la face avant et la face arrière) du boîtier 122 assemblé, et par exemple longer tout ou partie des bords des éléments 125 et/ou de l'élément réfléchissant 126 contenus dans la face avant et/ou la face arrière du boîtier 122 assemblé.

L'élément de liaison 123 peut par exemple être réalisé en matériau plastique moulé.

L'élément de liaison 123 comporte à une de ses extrémités l'arbre 123a, qui est dimensionné pour s'insérer dans le moyeu 122c, de sorte qu'une fois les éléments 122a, 122b et 123 assemblés, l'élément de liaison 123 est en liaison pivot par rapport au boîtier 122. Cette disposition permet de régler l'orientation de l'élément réfléchissant 126, par rotation autour de l'axe sensiblement vertical de la liaison pivot contrôlée par le cycliste.

Cette disposition permet aussi au boîtier 122 de se rabattre en cas de choc par l'avant ou par l'arrière, ce qui limite les risques de casse de l'accessoire 1.

Dans un mode de réalisation particulier, la forme du logement 122c est choisie pour permettre un rabattement d'un angle de préférence supérieur à 75°, de préférence supérieur à 80°, de préférence supérieur à 82°, vers l'avant ou vers l'arrière par rotation autour de l'axe de la liaison pivot de l'accessoire 1 monté sur le cintre 13.

L'élément de liaison 123 est symétrique par rapport au plan médiateur de boîtier assemblé, mais aussi par rapport à un plan parallèle au plan (x'O'z'). Cette disposition permet la réversibilité de l'accessoire gauche/droite, avec un assemblage des parties mâles et femelles du dispositif de fixation à verrouillage rapide ainsi que la possibilité de rabattement du boîtier vers l'avant et vers l'arrière indépendants du côté du cintre 13 sur lequel la partie 12 amovible de l'accessoire 1 est montée.

Pour les mêmes raisons, la partie femelle du dispositif de fixation à verrouillage rapide de la portion 111b de l'élément de liaison 111 doit présenter un plan de symétrie parallèle au plan (x'Oy') et un plan de symétrie parallèle au plan (x'Oz') une fois l'accessoire 1 monté sur le cintre 13.

Dans le mode de réalisation présenté sur les fig.2 et fig.4, cas où l'élément de liaison 111 ne présente pas de portion courbe 111d, pour l'assemblage de la partie 12 amovible de l'accessoire 1 avec la partie 11 de l'accessoire 1 fixée sur le cintre 13, le conducteur du véhicule présente les languettes 123d de l'extrémité 123b en regard des encoches 111c de l'élément de liaison 111. En d'autres termes, le conducteur du véhicule positionne les faces avant et arrière du boîtier 122 à l'horizontale, puis il insère la partie mâle du dispositif de fixation à verrouillage rapide dans la partie femelle de ce dispositif par translation suivant l'axe (Ox). Enfin, il impose une rotation d'un quart de tour à la partie 12 par rapport à l'axe (Ox) de sorte que les faces avant et arrière du boîtier 122 soient effectivement placées dans un plan sensiblement vertical, et tournée vers l'avant, respectivement vers l'arrière, du véhicule.

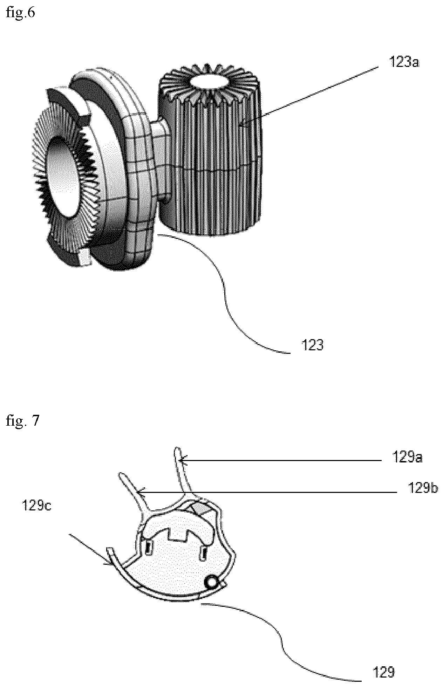

Dans un mode de réalisation, la portion 123b de l'élément de liaison 123 est de plus munie de crans de réglage 123e, répartis avec une symétrie de révolution autour d'un axe parallèle à l'axe (O'x') correspondant à l'axe (Ox) une fois l'élément de liaison 123 inséré et verrouillé dans l'élément de liaison 111, coopérant avec des crans analogues prévus dans la portion 111b de l'élément de liaison 111. Ce mode de réalisation peut être observé sur les fig.5 et fig. 6.

Grâce à cette disposition, le conducteur du véhicule peut affiner l'orientation du boîtier 122 par une rotation autour de l'axe (Ox) intermédiaire entre 0 et 90°, ces angles correspondant au déverrouillage de la partie amovible 12 de l'accessoire 1.

On comprend que les rôles des parties mâle et femelle du dispositif de verrouillage rapide sont complémentaires et qu'en conséquence, dans un autre mode de réalisation, la partie mâle du dispositif de verrouillage rapide pourrait être placée sur l'élément de liaison 111 et la partie femelle sur l'élément de liaison 123.

On comprend aussi que le positionnement l'orientation des encoches 111c de l'élément 111 lors de sa fixation sur le cintre 13 du guidon détermine la gamme d'orientations possibles pour la face avant du boîtier par rapport à la verticale. Il n'est donc pas obligatoire qu'après rotation d'un quart de tour, cette face avant soit dans un plan vertical, si le confort visuel de l'utilisateur nécessite un positionnement différent.

Le positionnement de la partie 11 peut donc être librement adapté à la taille et à la position du conducteur du véhicule au moment de son assemblage sur le cintre 13. Le système de vissage par expansion permet de régler en partie cette position par dévissage incomplet de l'élément 111 et rotation de l'angle souhaité, avant de procéder au vissage complet.

Dans un mode de réalisation particulier, représenté sur la fig. 6, l'arbre 123a est rainuré et le moyen 122c dans lequel cet arbre 123a vient s'insérer est lui aussi rainuré, de préférence avec un matériau souple, de manière à d'assurer un meilleur maintien de la position choisie pour le rétroviseur en cas de choc ou vibration. Notamment, les rainures de l'arbre 123a peuvent venir en appui sur des rainures souples du moyeu 122c formé dans le boîtier 122.

Un système de fixation à baïonnette ou tout autre système à verrouillage rapide peut être envisagé, pour peu qu'il conserve les éléments de symétrie évoqués plus haut.

L'assemblage des parties 11 à fixer sur le cintre 13 et 12 amovible se fait donc sans outil, sans effort particulier et rapidement. Cette disposition permet au conducteur du véhicule d'emporter avec lui et de ranger la partie 12 amovible lorsque le véhicule est stationné dans une zone non sécurisée de la voie publique par exemple. Elle permet aussi le remplacement facile et immédiat du rétroviseur essentiel à la sécurité par le second rétroviseur en cas de casse, si le véhicule est équipé de deux accessoires 1.

Dans le cas où le véhicule est équipé de deux accessoires 1, cette disposition permet aussi une réinstallation rapide des deux parties 12 amovibles sur un véhicule, lorsque le conducteur reprend son véhicule après l'avoir stationné, sans que le conducteur du véhicule n'ait besoin de réfléchir au côté du cintre 13 sur lequel il faut fixer l'une ou l'autre des parties 12 amovibles. Cette disposition s'inscrit en outre dans une logique de développement durable, puisqu'il n'est pas nécessaire de produire deux types d'accessoires 1, à savoir des accessoires 1 pour le côté gauche et des accessoires 1 pour le côté droit, le dispositif pouvant être vendu à l'unité et non par paire gauche/droite. La conception modulaire permet d'ailleurs le remplacement seulement d'une partie 12 quel que soit le côté concerné.

Le mode de réalisation de l'élément de liaison 123, assurant la liaison charnière du boîtier 122 par rapport au cintre du guidon 13 une fois l'accessoire 1 assemblé, ainsi que la liaison entre les parties 11 fixe et 12 amovible sans outil permet d'obtenir un encombrement latéral optimal de l'accessoire 1.

En effet, la charnière étant montée à l'intérieur du boîtier 122, l'essentiel de la surface de la face arrière du boîtier peut être recouvert de l'élément réfléchissant 126 et/ou correspondre 125 à une zone transparente à la lumière visible. En d'autres termes, l'essentiel de la surface de la face arrière du boîtier assure la fonction rétroviseur et/ou la fonction indicateur de changement de direction, dont le fonctionnement sera décrit plus loin.

Seuls l'extrémité 111b, la portion de raccord 123c, une fraction de l'extrémité 123a et le boîtier 122 (et optionnellement 111d) s'étendent à l'extérieur du cintre, puisque l'extrémité 123b est insérée dans l'extrémité 111b et l'extrémité 123a est partiellement placée à l'intérieur du logement 122c se trouvant à l'intérieur du boîtier 122.

Au final, la longueur d (voir fig.1) dans la direction gauche-droite de l'accessoire 1 à l'extérieur du guidon (en l'absence de la portion courbe 111d) est proche de la longueur d' (voir fig.1) du boîtier 122. La différence entre les longueurs d et d' est de préférence inférieure à 1cm, de préférence inférieure à 0,9 cm, de préférence inférieure à 0,8 cm, de préférence inférieure à 0,7 cm, de préférence inférieure à 0,6 cm, de préférence inférieure à 0,5 cm.

Grâce à cette disposition, le poids de l'accessoire 1 est optimisé par rapport à ses fonctions de rétroviseur et/ou d'indicateur de changement de direction.

Par ailleurs, grâce à cette disposition, le poids et l'encombrement de la partie 12 amovible de l'accessoire 1 sont optimisés par rapport à l'une et/ou l'autre de ces fonctions, de manière à ce que le conducteur du véhicule puisse transporter dans un volume réduit et sans difficulté la partie 12 lorsque le véhicule est stationné.

Optionnellement, un élément aimanté peut être introduit dans ou sur le boîtier 122 de façon à ce que deux parties 12 puissent être superposées l'une sur l'autre et aimantées l'une à l'autre. Ce mode de réalisation permet un stockage et un transport facilité d'une paire de parties 12 amovibles.

A l'intérieur du boîtier 122 sont placés :
- un circuit électrique miniaturisé comprenant une batterie ou une pile, au moins une source de lumière visible,
- et l'électronique nécessaire pour commander les cycles d'allumage de la ou des sources de lumière. Ces éléments n'ont pas été représentés sur la fig.2.

De préférence, la source de lumière est alimentée par une batterie rechargeable par câble micro-USB, dont la prise micro-USB femelle 128 est accessible par exemple par la face avant du boîtier 122.

Optionnellement, un capuchon de protection 128b amovible, notamment en caoutchouc ou silicone, peut protéger la prise micro-USB femelle 128.

La ou les sources de lumière visible sont des ampoules, par exemple de type LED. Elles émettent de préférence une lumière orange, usuelle dans le domaine des indicateurs de changement de direction.

Chaque source de lumière visible est placée à l'intérieur du boîtier en regard d'une zone transparente 125, de manière à ce que la lumière qu'elle émet soit visible de l'extérieur du boîtier.

Plusieurs sources de lumière peuvent être prévues et de préférence placées de manière à respecter la symétrie de la partie 12 amovible de l'accessoire 1 par rapport au plan médiateur. Par exemple, deux, quatre ou six LED peuvent être insérées dans le boîtier, pour augmenter la visibilité du signal lumineux et/ou créer une redondance pour que le dispositif reste fonctionnel même en cas de claquage d'une ou plusieurs LED.

Au moins un cycle d'allumage/extinction de la source lumineuse peut être répété de manière périodique. Plusieurs cycles peuvent être prévus, avec des rapports cycliques d'allumage différents par exemple. Il peut aussi être prévu d'allumer la source de manière continue.

Le démarrage des répétitions du cycle d'allumage/extinction, ainsi que l'arrêt de ces répétitions, est commandé par l'intermédiaire d'un ou plusieurs interrupteurs 124 qui peuvent être actionnés par l'extérieur du boîtier 122.

Le positionnement du ou des interrupteurs 124 est symétrique par rapport au plan médiateur de la partie amovible 12 de l'accessoire 1. Cette disposition permet d'obtenir un accessoire 1 réversible gauche/droite, et une partie 12 amovible réversible gauche/droite.

Le positionnement des éléments du circuit électrique à l'intérieur du boîtier est indifférent du point de vue des éléments de symétrie associés à la réversibilité gauche/droite, puisqu'ils ne sont pas impliqués dans l'assemblage des parties 11 et 12 de l'accessoire 1, ni dans la fonction rétroviseur, ni dans la zone éclairée par l'accessoire 1, qui est quant à elle plutôt déterminée par le positionnement de la ou des zones transparentes 125. Le circuit électronique, la batterie, la prise micro-USB,..., peuvent ainsi ne pas être symétriques par rapport au plan médiateur du boîtier 122 sans que cela n'obère la réversibilité gauche/droite de l'accessoire 1.

Dans un mode de réalisation représenté sur la fig.1 et la fig.4, deux interrupteurs 124 sont placés à proximité de l'élément de liaison 123, de manière à limiter l'encombrement latéral de l'accessoire 1 monté sur le cintre 13, et à être accessibles au conducteur du véhicule sans qu'il ne soit nécessaire de lâcher le guidon du côté de l'accessoire 1.

Dans un mode de réalisation, par pression successives sur l'interrupteur 124, le conducteur du véhicule peut sélectionner successivement les différents modes possibles d'allumage/extinction de la source lumineuse.

Dans un mode de réalisation particulier, l'interrupteur 124 comporte deux actionneurs, l'un permettant d'ouvrir ou de fermer le circuit électrique, l'autre permettant de sélectionner un cycle d'allumage/extinction parmi les cycles possibles.

Dans le mode de réalisation présenté ici, l'accessoire combine avantageusement les deux fonctions de rétroviseur et d'indicateur de changement de direction, mais il va de soi qu'on peut décliner ce mode de réalisation pour proposer un accessoire réversible gauche-droite ne présentant que l'une de ces deux fonctions.

En option, le rétroviseur clignotant comprend un accessoire antivol 129, représenté dans un mode de réalisation particulier sur la fig. 7 en vue en coupe dans un plan perpendiculaire au plan de la fig.2. Le dispositif antivol 129 est configuré pour qu'il ne soit plus possible de déverrouiller le dispositif de verrouillage rapide lorsque le dispositif antivol est installé sur l'accessoire pour vélo 1.

Par exemple, le dispositif antivol 129 comprend deux languettes de blocage 129a et 129 b qui viennent s'insérer dans des évidements de la partie 11 de l'accessoire à fixer sur le guidon et empêcher la rotation de la partie amovible de l'accessoire 1 par rapport à la partie 11 de l'accessoire 1 à fixer sur le guidon, notamment la rotation de l'extrémité 123b de l'élément de liaison 123. Les languettes de blocage 129a et 129 b peuvent être formées dans un matériau déformable élastiquement.

Le dispositif antivol 129 n'est accessible de l'extérieur de l'accessoire 1 une fois en place qu'au niveau d'une surface lisse constituant une portion de cylindre 129c. Le dispositif antivol 129 ne peut donc pas être retirée à la main et ne peut être enlevé qu'au moyen d'une clé spécifique, présentant des éléments aptes à coopérer avec la surface 129 c.

### LISTE DES SIGNES DE RÉFÉRENCE

1 : accessoire pour vélo
11 : partie de l'accessoire 1 à fixer sur le cintre 13
12 : partie amovible de l'accessoire 1
13 : cintre du guidon du véhicule
111 : élément de liaison de la partie 11 de l'accessoire 1 avec la partie 12 de l'accessoire 1
111a : extrémité de l'élément 111 à encastrer dans l'élément 112
111b : extrémité de l'élément 111, comportant la partie femelle du dispositif de verrouillage rapide
111c : encoches de a partie femelle du dispositif de verrouillage rapide
111d : portion courbe
112 : élément de liaison de la partie 11 de l'accessoire 1 avec le cintre 13, permettant l'encastrement de la partie 11 par expansion
113 : troisième élément de la partie 11 de l'accessoire 1 permettant le vissage de l'élément 111 avec l'élément 112
122 : boîtier
122a : moitié avant du boîtier
122b : moitié arrière du boîtier
122c : moyeu de la liaison pivot
123 : élément de liaison entre les parties 11 et 12 de l'accessoire 1
123a : extrémité de l'élément de liaison 123 formant l'arbre de la liaison pivot
123b : extrémité de l'élément de liaison 123 formant l'élément mâle du dispositif de fixation rapide
123c : portion de raccord entre les extrémités 123a et 123b
123d : languettes à insérer dans les encoches 111b
123e : crans de réglage
124 : interrupteur
125 : zone transparente à la lumière visible
126 : élément réfléchissant la lumière visible
127 : surmoulage
128 : prise micro-USB
128b : capuchon de protection de la prise micro-USB
129 : dispositif antivol
129 a et b : languettes de blocage
129 c : surface externe du dispositif antivol 129.

## Revendications

1. Accessoire (1) pour véhicule à pédales muni d'un guidon comprenant :
a. une partie amovible (12) sans outil
- comprenant :
i. un boîtier (122),
ii. un élément (122c) formant le moyeu d'un dispositif de liaison pivot,
iii. un élément de liaison (123) comprenant à une première extrémité (123b) la première partie d'un dispositif de fixation à verrouillage rapide, et à une deuxième extrémité (123a) l'arbre dudit dispositif de liaison pivot, guidé en rotation par ledit moyeu (122c) d'un dispositif de liaison pivot de sorte que ledit élément de liaison (123) est en liaison pivot par rapport audit boîtier (122),
- et comportant :
i. au moins un élément réfléchissant (126) fixé sur ledit boîtier (122) et recouvrant au moins une partie d'une face extérieure dudit boîtier (122),
ii. et/ ou un circuit électrique placé au moins en partie à l'intérieur du boîtier et comportant une batterie électrique, au moins un interrupteur (124) actionnable depuis l'extérieur dudit boîtier (122) et au moins une source de lumière visible dont une fraction de la lumière est émise vers l'extérieur dudit boîtier (122) au travers d'une portion de surface transparente (125) du boîtier (122),
b. une partie (11) à fixer sur ledit guidon comprenant à une première extrémité un système (112) destiné à être inséré dans le cintre (13) dudit guidon pour assurer une liaison encastrement avec le cintre du guidon et à une deuxième extrémité (111) la deuxième partie dudit dispositif de fixation à verrouillage rapide destinée à coopérer avec la première partie dudit dispositif de fixation à verrouillage rapide pour lier ladite partie (11) à fixer sur le guidon et ladite partie (12) amovible,
**caractérisé en ce que** ledit moyeu (122c) d'un dispositif de liaison pivot est à l'intérieur dudit boîtier (122).

2. Accessoire selon la revendication 1**caractérisé en ce que** la portion de l'accessoire (1) extérieure au cintre du guidon est symétrique par rapport à un plan contenant un axe horizontal gauche-droite, de sorte qu'il est réversible et peut être monté et utilisé équivalemment à gauche ou à droite du cycliste.

3. Accessoire selon l'une des revendications 1 à 2, **caractérisé en ce que** ledit dispositif de fixation à verrouillage rapide est de type verrouillage à quart de tour ou à baïonnette.

4. Accessoire selon l'une des revendications 1 à 3 **caractérisé en ce que** l'au moins un élément réfléchissant (126) recouvre au moins en partie la portion de surface externe du boîtier sous laquelle est formé ledit moyeu (122c) d'un dispositif de liaison.

5. Accessoire selon l'une des revendications 1 à 4 **caractérisé en ce que** la longueur (d) de la partie de l'accessoire (1) externe au cintre du guidon dans la direction gauche-droite diffère de moins de 1 cm de la longueur (d') dudit boîtier (122) dans cette direction.

6. Accessoire selon l'une des revendications 1 à 5 **caractérisé en ce que** ladite partie amovible (12) comporte au moins un élément aimanté.

7. Accessoire selon l'une des revendications 1 à 6 **caractérisé en ce que** ledit élément de liaison (123) comporte un dispositif de réglage et de blocage de l'orientation du plan de la face avant par rapport à un axe horizontal gauche-droite, par coopération de formes avec ladite deuxième extrémité (111) de la partie (11) à fixer sur le guidon comportant ladite deuxième partie dudit dispositif de fixation à verrouillage rapide.

8. Accessoire selon l'une des revendications 1 à 7 **caractérisé en ce que** ledit boîtier (22) peut pivoter d'un angle supérieur à 80° dans le sens horaire et dans le sens trigonométrique autour de l'axe de la liaison pivot orienté arbitrairement.
